# EUROPÄISCHE PATENTSCHRIFT

(11) **EP 2 155 552 B1**
(45) Veröffentlichungstag und Bekanntmachung des Hinweises auf die Patenterteilung: **22.01.2014**
(21) Anmeldenummer: 08774047.8
(22) Anmeldetag: 15.05.2008
(51) Int. Cl.: B64C 27/32, B64C 39/02

(54) **HUBSCHRAUBER**
HELICOPTER
HELICOPTERE

(30) Priorität: 15.05.2007 DE 202007006976 U
(43) Veröffentlichungstag der Anmeldung: 24.02.2010
(73) Patentinhaber: JUNG, Nadine, 8303 Bassersdorf (CH)
(72) Erfinder: JUNG, Bernd, 61239 Ober-Mörlen (DE)
(74) Vertreter: Stoffregen, Hans-Herbert
(86) Internationale Anmeldenummer: PCT/EP2008/055993
(87) Internationale Veröffentlichungsnummer: WO 2008/138972

(56) Entgegenhaltungen:
- WO-A-99/38769
- DE-A1- 2 628 274
- DE-A1- 19 860 609
- GB-A- 2 419 122
- US-A- 3 556 438

## Beschreibung

Die Erfindung bezieht sich auf einen Hubschrauber umfassend zumindest einen Rotor, einen den Rotor antreibbaren Antrieb sowie eine eine Last wie eine Person aufnehmende Zelle, wobei der zumindest eine Rotor gegenüber der Zelle kardanisch gelagert ist, und wobei der Antrieb zumindest einen Elektromotor aufweist, der mit dem zumindest einen Rotor als Einheit gegenüber der Zelle gelagert ist.

Aus der DE-C-78 903 ist ein Hubschrauber bekannt, bei dem eine Rotoren-Antriebseinheit kardanisch verschwenkbar ist, wodurch eine einfache Manövrierbarkeit gegeben ist.

Ein Hubwerk nach der FR-A-10 38 846 weist ein koaxiales Rotorsystem auf, das ausschließlich mit einem Umlaufmotor betrieben werden kann. Durch die bedingt niedrige Drehzahl des Umlaufmotors muss dieser sehr groß ausfallen, um die benötigte Leistung zu liefern.

Ein Hubschrauber mit koaxial angeordneten Rotoren ist aus der DE-C-27 57 480 bekannt. Dabei erfolgt der Antrieb der Rotoren über eine von einem Motor betätigte Getriebeeinheit. Die zyklische Rotorblattverstellung wird durch über Stellmotoren einstellbare Taumelscheiben durchgeführt.

Der WO-A-84/00339 ist ein Hubschrauber zu entnehmen, bei dem der Antrieb zusammen mit den Rotoren kardanisch verschwenkbar ist.

Ein Fluggerät der eingangs genannten Art ist der GB-A-2 419 122 zu entnehmen, welche den nächstliegenden Stand der Technik darstellt.

Der vorliegenden Erfindung liegt die Aufgabe zu Grunde, einen Hubschrauber der eingangs genannten Art so weiterzubilden, dass eine einfache Handhab- bzw. Bedienbarkeit gegeben ist. Auch soll sich eine kompakte und leichte Bauart ergeben, die einen umfassenden Einsatz ermöglicht. Eine einfache Bedienbarkeit, ein günstiges Nutz- /Lastverhältnis sowie ein geringer Energieverbrauch bei niedrigen oder keinen Emissionswerten sollen gleichfalls erzielbar sein.

Zur Lösung der Aufgabe sieht die Erfindung im Wesentlichen vor, dass die aus dem Elektromotor und dem Rotor bestehende Einheit gegenüber der Zelle kardanisch gelagert ist, dass der Elektromotor mit Hochleistungsbatteriezellen, Brennstoffzellen oder einem Generator verbunden ist, der über einen Diesel-, Otto-, Wankelmotor, Schwingkolbenmotor oder ein eine Gasturbine umfassendes Energiewandlersystem nach dem Modulbaukonzept antreibbar ist.

Bei Einsatz eines Kolbenmotors ist der Anker des Generators vorzugsweise direkt, d. h. anstelle oder mit dem herkömmlichen Schwungrad an der Kurbelwelle befestigt. Der Anker ist vorzugsweise mit Dauermagneten besetzt, der von Statorblechen und Wicklungen zur Stromentnahme umringt ist.

Der Generator kann auch als Anlasser dienen, so dass der herkömmliche Anlasser, das Schwungrad und das Kupplungskonzept überflüssig sind.

Vorzugsweise wird Drehstrom mit seiner drehzahlabhängigen Frequenz gleichgerichtet und als Block- oder Sinus-Kommutierung dem bürstenlosen vorzugsweise als Torquemotor ausgebildeten Direktantrieb mit Dauermagneten hoher magnetischer Energiedichte z. B. Neodymeisen zugeführt.

Insbesondere ist der Direktantrieb ein Außenläufer mit hoher Polzahl, d. h. die Dauermagnete liegen außen und der Spulenkörper innen (Stator). Eine Drehmomentsteigerung mittels elektrischer Untersetzung ist möglich. Es ist somit ein Direktantrieb mit einer Vielpolmaschine gegeben.

Ein bürstenkommutierter Direktantrieb ohne Zwischenkreis (Generator/Motor) kann eine weitere Ausführungsform bilden.

Andere Motorvarianten wie Reluktanzmotor, Asynchronmotor als Außenläufer kommen gleichfalls in Frage.

Es kann auch vorgesehen sein, dass ein Energiewandlersystem zum Versorgen des Elektromotors benutzt wird, bei dem ein Verdichter druckgasmäßig mit einer Turbine verbunden ist, wobei der Verdichter ein Vorverdichter zumindest eines Gasdruckerzeugers sein kann, der zumindest einen in einem Zylinderraum hin und her bewegbaren und diesen in zwei Verbrennungskammern unterteilenden Kolben aufweist und druckgasmäßig mit der Turbine verbunden ist. Durch eine diesbezügliche Konstruktion wird mit hohem Wirkungsgrad elektrische Energie erzeugt, über die der Elektromotor versorgt wird, um den zumindest einen Rotor anzutreiben. Der Gasdruckerzeuger ersetzt die herkömmliche Brennkammer der Gasturbine.

Der Rotor geht von einer Hohlwelle aus die Läufer des Elektromotors trägt, dass die Hohlwelle koaxial eine Halterung des Elektromotors umgibt und dass von der Halterung zumindest ein Stator des Elektromotors ausgeht.

Somit wird der Rotor getriebelos angetrieben, wobei die Komponenten des Elektromotors, um die Rotation des Rotors zu erzeugen, zum einen von dem Rotor und zum anderen von der Halterung des Elektromotors ausgehen.

Die Zelle ist gegenüber der Halterung des bzw. der Rotoren verdrehgesichert.

Auch wenn der Hubschrauber einen einzigen Rotor aufweist, ist die Zelle gegenüber der Halterung verdrehgesichert. Ferner ist sodann ein Heckrotor vorgesehen, der mit der Halterung über einen Träger verbunden ist. Dabei ist der Heckrotor gleichfalls vorzugsweise elektrisch antreibbar, wobei insbesondere vorgesehen ist, dass der Heckrotor zwei gegenläufige Rotoren umfasst, die jeweils von einem gesonderten Elektromotor antreibbar sind. Durch die zwei Rotoren ergibt sich keine Momentverschiebung bei Last-/Schubwechsel, wobei sich der Schubvektor in der Hauptrotorebene befinden soll. Dies erleichtert das Fliegen.

Nach einem Vorschlag kann vorgesehen sein, dass der Träger für den Heckrotor zwei zueinander beabstandete von der Halterung ausgehende Streben umfasst, zwischen denen sich die Rotorblätter des Hauptrotors erstrecken.

Besteht die Möglichkeit, dass der Rotor über einen einzigen Elektromotor angetrieben wird, so können auch zwei Elektromotoren zum Einsatz gelangen.

Bevorzugterweise umfasst der Hubschrauber zwei gegenläufige Rotoren, wobei jeder Rotor über einen gesonderten Elektromotor angetrieben werden kann. Dies ist jedoch nicht zwingend. Vielmehr kann ggfs. auch ein einziger Elektromotor zum Antrieb benutzt werden.

Beim Einsatz von zwei Elektromotoren gehen diese von der Halterung aus, die koaxial von Hohlwellen umgeben ist, wobei von jeder Hohlwelle einer der Rotoren und ein Läufer von einem der Elektromotoren ausgeht, dem ein von der Halterung ausgehender Stator des Elektromotors zugeordnet ist.

Werden die gegensinnig drehenden Rotoren von einem einzigen Elektromotor angetrieben, so geht dessen Läufer von einem der Rotoren und dessen Stator von dem anderen Rotor aus, um somit den Antrieb zu ermöglichen.

Der erfindungsgemäße Hubschrauber stellt aufgrund der kardanischen Aufhängung eine systembedingte Eigenstabilität sicher. Durch die Verwendung eines Elektromotors ergibt sich ohne Energielieferanten ein geringes Gewicht. Das Koaxialrotorsystem ist drehmomentfrei und die Zelle kardanisch momentneutral aufgehängt. Es besteht die Möglichkeit, dass der Energielieferant abgeworfen wird, der von der Zelle ausgeht. Somit ist ein Notlandeverfahren auf einfache Weise durchführbar, das mit einer Batterie durchgeführt bzw. im Autorotationsfall batterieunterstützt abgeschlossen werden kann.

Unabhängig hiervon ergibt sich ein besonders hoher Wirkungsgrad dann, wenn als Energielieferant ein Turbogenerator aus einem der Zeichnung zu entnehmenden Gasturbinenkonzept nicht beansprucht zum Einsatz gelangt. Zentrales Bauteil ist der Stator/Generator mit seinen beiden Lagerstellen, die ölfrei mit Fettdauerschmierung oder Ölnebelschmierung versehen sind, wobei die Ölnebelschmierung aus der Starter/Generator-Innenkühlung, sofern dieser sprühölaekühlt ausgeführt ist, resultieren kann.

In weiterer Ausgestaltung ist der Starter/Generator anstelle mit konventioneller Lagertechnik mit Magnetlagerung versehen, was einer höheren Wellensteifigkeit zugute kommt. Ist Luftlagertechnik gewünscht, sind keine wesentlichen zusätzlichen Bauteile wie Zylinder und Gehäuse erforderlich. Diese Aufgabe übernimmt zumindest teilweise der Roboter und Stator des Starter/Generators mit seinem bedingten Luftspalt und relativ rauer Oberfläche.

Dieses Gasturbinenkonzept ist getriebelos und besitzt auch sonst keine Bauteile, die zusätzlichen Bauraum benötigen. Gewicht erhöhen und Wirkungsgradverluste mit sich bringen. Infolgedessen fehlen sonst übliche Zahnräder, Pumpen, Wellen, Kugellager, Abdichtungen, Gehäuse, Schläuche, Verrohrungen, etc. Somit kann das Gehäuse aus Verbundwerkstoffen wie zum Beispiel CFK hergestellt werden, wobei eine relativ einfache Herstellung ermöglicht wird, da es sich um zylindrische Körper handelt.

Dieses Gasturbinensystem bzw. -familie, das bzw. die zur Anwendung gelangen kann, ist in Modulbauweise mit identischen Grundkomponenten aufgebaut.

Das Gehäuse und die Lagerung des Starter/Generators trägt auf der einen Seite den Leistungsteil - power head - mit Brennkammer, Turbinenstufen, etc., wobei die Verdichterendstufe sich ebenfalls auf dieser Seite des Starter/Generators befinden kann. Auf dem gegenüberliegenden Wellenstumpf des Starter/Generators befinden sich - sofern vorgesehen - eine Vorveidichterstufen, so dass ein kompaktes Antriebsaggregat mit hoher Energiedichte zur Verfügung steht. Die Baukastenweise ermöglicht mittels Verbindungsstück die Adaption von zusätzlichen Baugruppen wie Stufengetriebe, Pumpe, Kompressor, Wandlergetriebe, etc. Somit steht eine Gasturbinenfamilie für die vielfältigsten Aufgaben zur Verfügung, wobei neben dem Antrieb von Hubschrauber, Luft-, Straßen- und Schienenfahrzeugen weitere Einsatzmöglichkeiten gegeben sind.

Das Grundkonzept besitzt einen Verdichter und eine Turbine, die von einer gemeinsamen Welle ausgehen, auf der ein Starter/Generator angeordnet ist, über den der Elektromotor mit Strom versorgt wird. Besondere Vorteile ergeben sich dann, wenn der Verdichter Vorverdichter eines Gasdruckerzeugers ist, von dem aus die Turbine mit den expandierenden Gasen versorgt wird, wobei gleichermaßen der Kolben des Gasdruckerzeugers einer Dreh- oder linearen Hin- und Herbewegung unterliegen kann.

Insbesondere ist ein Energiewandlersystem zur Erzeugung der elektrischen Energie umfassend einen Verdichter und eine druckgasmäßig mit dieser verbundene Turbine mit Turbinenwelle vorgesehen, wobei der Verdichter ein Vorverdichter eines Gasdruckerzeugers ist, der zumindest einen in einem Zylinderraum hin und her bewegbaren und diesen in zwei Verbrennungskammern unterteilenden Kolben aufweist und druckgasmäßig mit der Turbine verbunden ist. Vorverdichtete Luft gelangt von dem Verdichter in die Verbrennungsräume des Gasdruckerzeugers, von denen die Verbrennungsgase der Turbine zugeleitet werden, um sodann mittels eines Generators elektrische Energie erzeugen zu können. Hierzu ist vorgesehen, dass von der Turbinenwelle ein Generator ausgeht, dessen Welle folglich Abschnitt der Turbinenwelle ist und umgekehrt.

Ist bevorzugterweise die Koaxialrotoranordnung zu nennen, so besteht jedoch auch die Möglichkeit, die erfindungsgemäße Lehre bei einem Hubschrauber mit einem einzigen Rotor sowie mit einem elektrisch betriebenen Heckrotor zu realisieren. Hierbei ergeben sich die gleichen Vorteile bezüglich der momentneutralen kardanischen Aufhängung und des Antriebes mit hohem Wirkungsgrad. Unabhängig hiervon muss die Zelle gegenüber der Rotoreinheit gegen eine Verdrehung gesichert sein.

Durch die entsprechende konstruktive Auslegung ist der Hubschrauber durch die natürlichen Kreiselkräfte stabilisiert. Die Steuerung erfolgt ungeachtet kardanischer Aufhängung vorzugsweise mittels Taumelscheibe und kollektiver Blattverstellung, so dass eigentlich jede Person den Hubschrauber bedienen kann.

Erfindungsgemäße Rotorantriebe mit den in der Anmeldung beschriebenen Antriebsaggregaten bzw. Turbinen gelten auch für solche, bei denen die Zelle des Hubschraubers nicht kardanisch gelagert ist. Auch insoweit sind erfindungsgemäße Lehren gegeben.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausfühmngsbeispielen.

Es zeigen:
- Fig. 1: eine Ausführungsform eines Hubschraubers mit einem Rotor,
- Fig. 1a: eine Prinzipdarstellung eines Heckrotors des Hubschraubers gemäß Fig. 1,
- Fig. 2: eine Prinzipdarstellung einer Rotoreinheit mit zwei Elektroantrieben,
- Fig. 3: eine erste Ausführungsform eines Hubschraubers mit zwei gegenläufigen Rotoren,
- Fig. 4: eine zweite Ausführungsform eines Hubschraubers mit zwei gegenläufigen Rotoren,
- Fig. 5: eine Prinzipdarstellung einer Rotoreinheit mit zwei gegenläufigen Rotoren und zwei Elektroantrieben,
- Fig. 6: eine Prinzipdarstellung einer Rotoreinheit mit einem über zwei Elektroantriebe angetriebenen Rotor,
- Fig. 7: eine erste Ausführungsform einer Stator-/Generator-Anordnung,
- Fig. 8: eine zweite Ausführungsform einer Stator-/Generator-Anordnung,
- Fig. 9, 10: verschiedene Ausführungsformen von Energiewandlersystemen,
- Fig. 11: eine weitere Ausführungsform eines Hubschraubers,
- Fig. 12: eine Antriebseinheit und
- Fig. 13: Ausgestaltungen einer Turbine.

In der nachfolgenden Beschreibung von verschiedenen Ausführungsformen von Hubschraubern und deren Antrieben werden grundsätzlich für gleiche Elemente gleiche Bezugszeichen verwendet. Ferner werden Kenntnisse der grundsätzlichen Funktionen von Hubschraubern sowie Elektroantrieben vorausgesetzt, ohne dass es eingehender Erläuterungen bedarf.

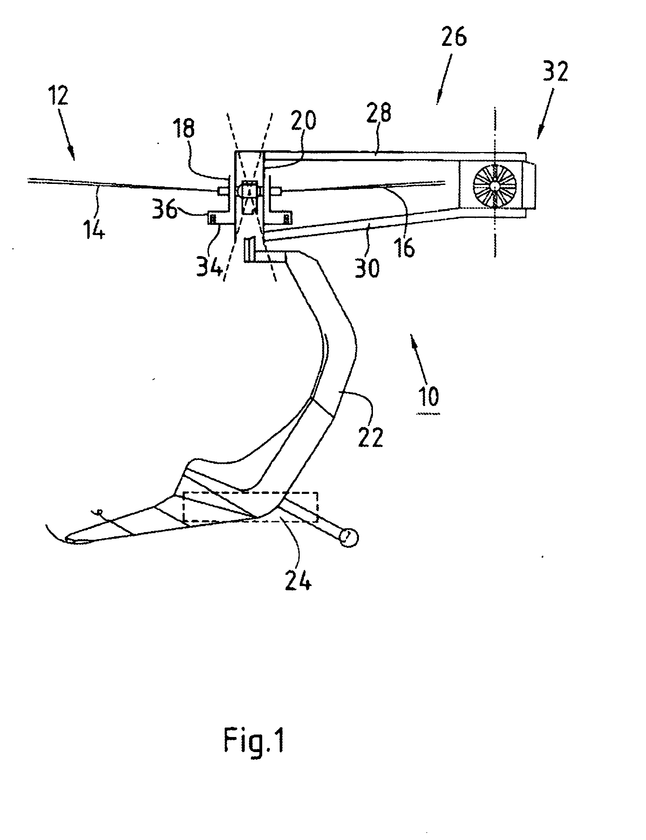

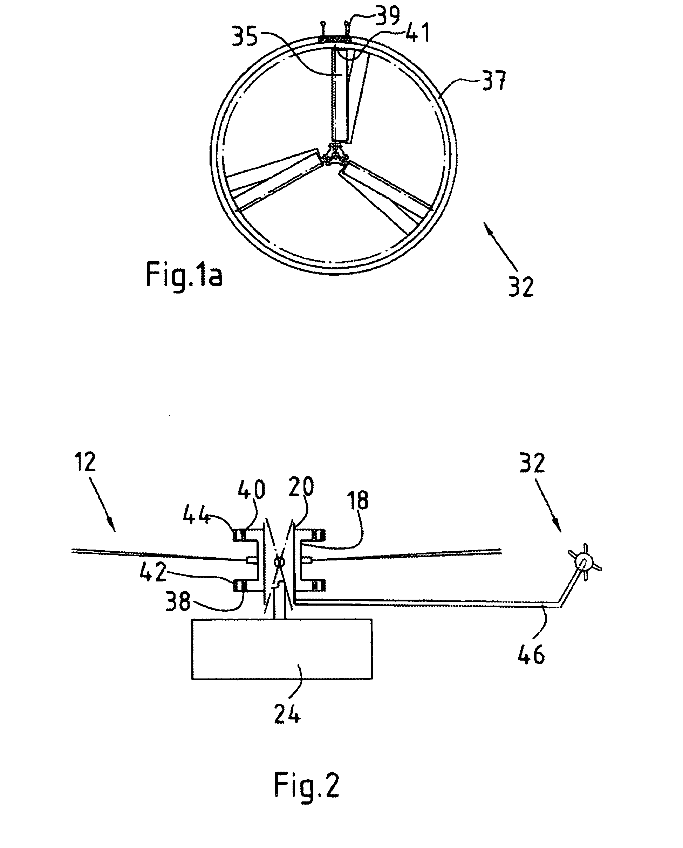

In Fig. 1 ist ein Hubschrauber 10 mit einem Rotor 12 dargestellt, deren Blätter 14, 16 einzeln oder zyklisch angesteuert werden können. Die Blätter 14, 16 gehen von einer Hohlwelle 18 aus, die koaxial zu einer Halterung 20 verläuft und gegenüber dieser drehbar abgestützt ist.

Der Antrieb des Rotors 12 erfolgt über einen von der Halterung 20 ausgehenden Elektromotor, von dem Stator 34 und Läufer 36 rein prinzipiell angedeutet sind.

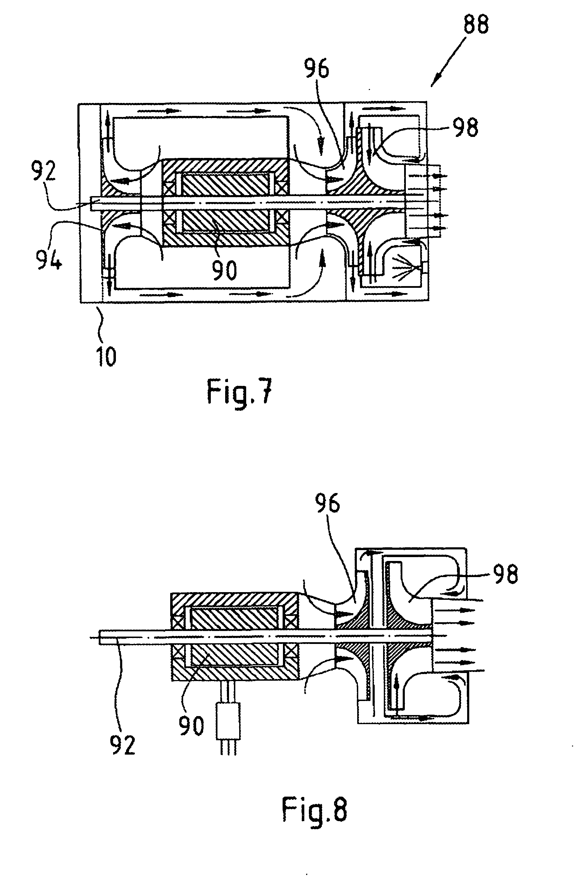

Eine z. B. eine Person aufnehmende Zelle 22 als Sekundärsystem ist kardanisch und momentneutral mit dem Rotor 12 bzw. der Halterung 20 verbunden. Die Zelle 22 weist des Weiteren einen Energielieferanten 24 auf, über den der zum Antrieb des Rotors 12 benötigte Elektromotor mit Strom versorgt wird. Als Energielieferant 24 kommen z. B. Hochleistungsbatteriezellen, Brennstoffzellen, hochenergetische Brennstoffe in Verbindung mit Energiewandlern für spezielle Einsätze in Frage. Anhand der Fig. 7 bis 9 werden diese näher erläutert. Der Energielieferant/Wandler 24 ist lösbar mit der Zelle 22 verbunden und kann im Notfall abgeworfen werden.

Von der Halterung 20 geht ein Rahmen 26 aus, der Streben 28, 30 umfasst, zwischen denen die Blätter 14, 16 des Rotors 12 drehbar sind. Der Rahmen 26 nimmt einen Heckrotor 32 auf, der elektrisch antreibbar ist. Dabei umfasst der Heckrotor 32 vorzugsweise drehmomentfrei gegenläufige Rotoren, die insbesondere über getaktete bürstenlose Gleichstrommotoren direkt antreibbar sind. Die E-Motoren sind vorzugsweise Außenläufermotoren, die in der Nabe der Rotoren untergebracht sind. Die Gegenläufigkeit der Rotoren bewirkt, dass keine Momentverschiebung bei Last-/Schubwechsel erfolgt.

Es besteht auch die Möglichkeit - wie die Fig. 1 a verdeutlicht -, dass die gegenläufigen Rotoren 33, 35 des Heckrotors 32 konzentrisch von einem Ring- oder Zylinderelement 37 umgeben werden, das umfangsseitig eine Vielzahl von Spulen 39 aufweist, von denen eine zeichnerisch dargestellt ist. Durch getaktete Erregung der Spulen werden die Rotoren 33, 35 in Rotation versetzt. Hierzu weisen die Rotoren 33, 35 in ihren Spitzen einen magnetischen Werkstoff wie Neodym auf. Der entsprechende Bereich ist mit dem Bezugszeichen 41 gekennzeichnet. Selbstverständlich sind entsprechende Spulen 39 für jeden Rotor 33, 35 vorgesehen.

Mit anderen Worten wird mittels eines getakteten Ringmotors der Heckrotor 32 angetrieben.

Von der Halterung 20 geht der Stator 34 des Elektromotors aus, dessen zugeordneter Läufer 36 von der Hohlwelle 18 ausgeht. Durch eine diesbezügliche Konstruktion ist der Rotor 12 getriebelos antreibbar.

In Fig. 2 ist rein prinzipiell der Energiewandler 24 dargestellt, der allerdings mit zwei Elektromotoren verbunden ist, deren Statoren 38, 40 von der Hohlwelle 18 ausgehende Läufer 42, 44 zugeordnet sind. Abweichend von dem Ausführungsbeispiel der Fig. 1 erstreckt sich von der Halterung 20 mit Heckrotor 32 verbundener Rahmen 46 unterhalb des Rotors 12. Ist in der Fig. 2 der Heckrotor 32 mit einem Rotor dargestellt, so sollten vorzugsweise zwei gegenläufige Rotoren eingesetzt werden, die über vorzugsweise getaktete Gleichstrommotoren antreibbar sind.

Die erfindungsgemäße Lehre erstreckt sich jedoch auch auf Hubschrauber mit zwei gegenläufigen Rotoren, also einem Koaxialsystem.

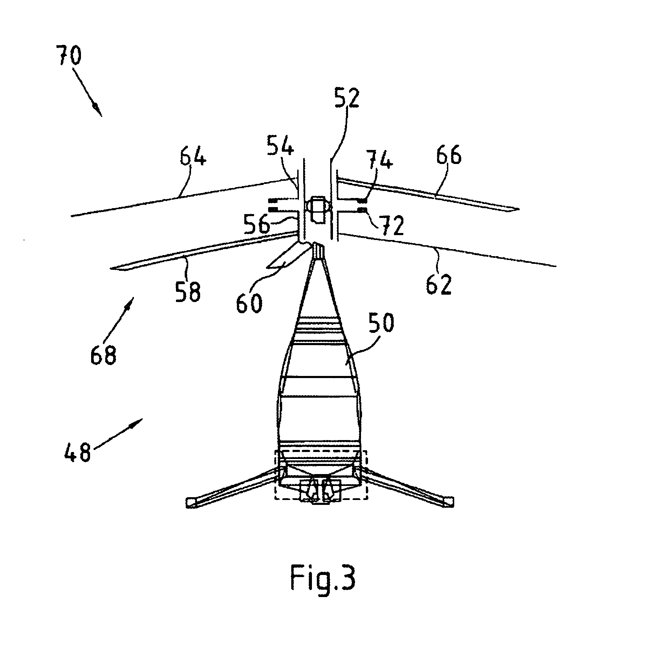

In Fig. 3 ist ein Hubschrauber 48 rein prinzipiell mit einer Zelle 50 dargestellt, die karda-nisch und momentenfrei aufgehängt ist, also von einer Halterung 52 ausgeht, die koaxial von zwei Hohlwellen 54, 56 umgeben ist, von denen Rotorblätter 58, 60, 62 bzw. 64, 66 der gegenläufigen Rotoren 68. 70 ausgehen. Die Rotoren 68, 70 werden mit einem Elek-tromotor angetrieben, der von der Halterung 52 ausgeht. Dabei geht von einer der Hohlwellen der Stator 70 und von der anderen Hohlwelle der Läufer 74 aus, die entsprechend der zeichnerischen Darstellung einander zugeordnet sind, um die gegenläu-fige Drehung zu ermöglichten.

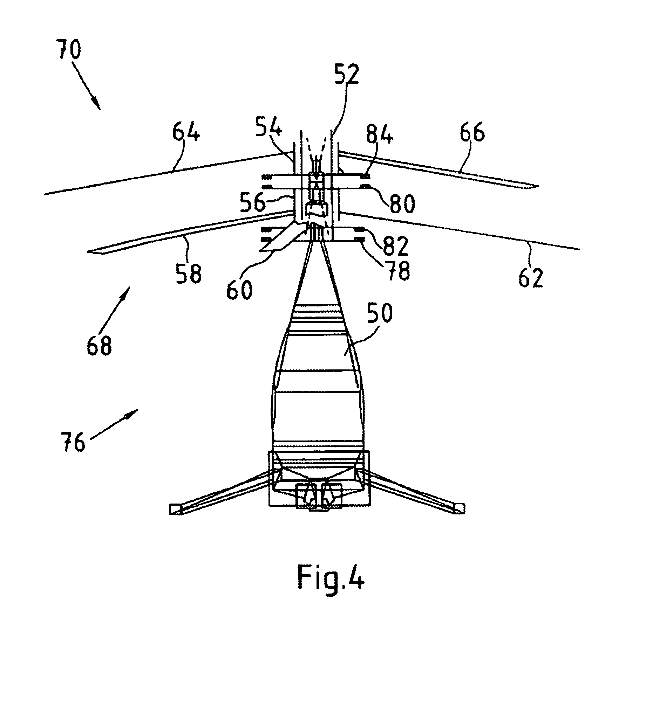

Ein Hubschrauber 76 gemäß Fig. 4 weist zwei Elektromotoren zum Antrieb der Rotoren 68, 70 auf, wobei von der Halterung die Statoren 78, 80 und von den Hohlwellen 54, 56 die zugeordneten Läufer 82, 84 der Elektromotoren ausgehen.

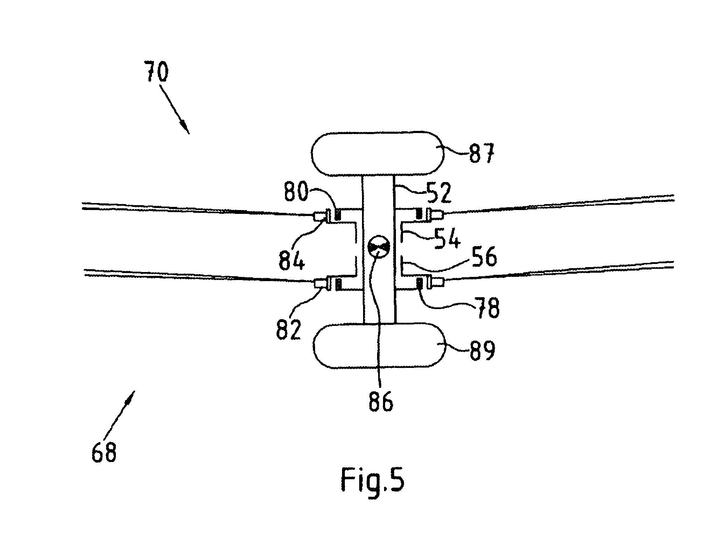

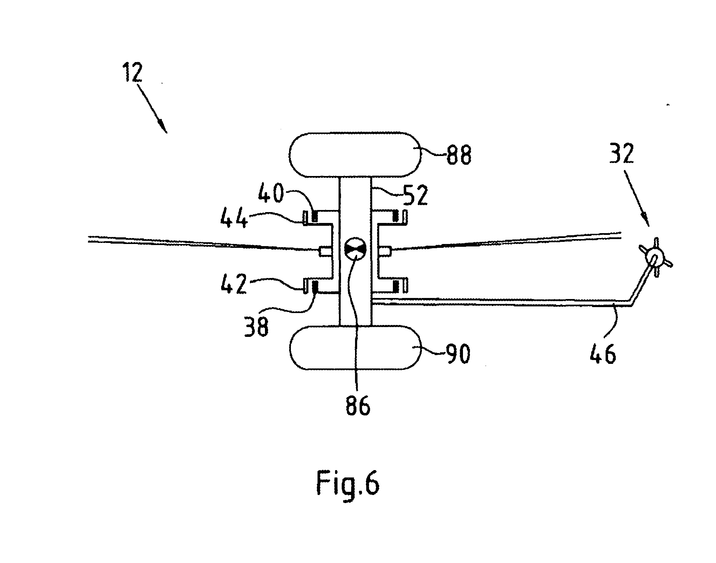

Anhand der Fig. 5 und 6 soll noch einmal das Prinzip der Rotorantriebe verdeutlicht werden, wobei allerdings keine kardanische Aufhängung vorgesehen ist. So sind in Fig. 5 die gegenläufigen Rotoren 68, 70 mit den gegenüber der Halterung 52 abgestützten Hohlwellen 54, 56 sowie den Statoren oder Ständern 78, 80 sowie den zugeordneten Rotoren oder Läufern 82, 84 dargestellt. Die Anordnung der Elektromotoren und der Rotoren einschließlich der Hohlwellen 54, 56 sowie der Halterung 52 ist dabei derart, dass Massenschwerpunkt und Auftriebsmittelpunkt 86 auf derselben Achse und Ebene liegen. Entsprechendes gilt für die Anordnung gemäß Fig. 6, bei der der Rotor 12 mittels zweier Elektromotoren angetrieben wird, wie die Ständer oder Statoren 38, 40 und die zugeordneten Läufer 42, 44 verdeutlichen. Als die Erfindung zumindest mitprägend findet auch bei dieser Ausführungsform der Antrieb über das beschriebene bzw. nachfolgend zu erläuternde Gasturbinenkonzept statt.

In den Fig. 5 und 6 ist mit dem Bezugszeichen 87 der Energielieferant wie Brennstoffzelle und mit dem Bezugszeichen 89 die Nutzlastzelle gekennzeichnet.

Zu den Rotoren ist anzumerken, dass diese faltbar sein können. Die Zelle als das Sekundärsystem ist kardanisch momentneutral aufgehängt. Hierdurch wird eine systembedingte Eigenstabilität erreicht. Der Antrieb der Rotoren selbst erfolgt getriebelos über den Elektromotor. Die Rotorblätter können zyklisch oder einzeln angesteuert werden. Als Energielieferant und Energiewandler kommen Hochleistungsbatteriezellen, Brennstoffzellen, Diesel-, Otto-, Wankelmotor mit Generator direkt auf der Motor- /Kurbelwelle in Frage. Insbesondere sind jedoch Eneraiewandlersysteme einzusetzen, wie diese prinzipiell den Figuren zu entnehmen sind.

Dabei sind in den Figuren grundsätzlich gleiche Elemente mit gleichen Bezugszeichen versehen

Bei der Beschreibung selbst wird auf Details von beschriebenen Aggregaten wie Verdichter, Turbine oder Generator nicht näher eingegangen, da es sich hierbei um Bauelemente handelt, die der Durchschnittsfachmann im hinreichenden Umfang kennt. Insoweit wird auf übliche Konstruktionen und Bauarten zurückgegriffen, ohne die Erfindung zu verlassen.

So ist in der Fig. 7 ein Energiewandler 88 prinzipiell dargestellt, mittels dessen über einen Generator 90 die zum Betreiben des bzw. der Elektromotoren erforderliche elektrische Energie erzeugt wird. Der Generator 90 weist eine Läuferwelle 92 auf, von der auf einer Seite des Generators 90 ein Vorverdichter 94 und auf der gegenüberliegenden Seite ein Verdichter 96 sowie eine Turbine 98 ausgehen. Über zum Beispiel eine Batterie wird der Generator 90 in Drehbewegung gesetz, um sodann über die Verdichter 94, 96 der Turbine 98 komprimierte Luft zuzuführen. Brennstoff wird beigemischt. Auf diese Weise wird die Generatorwelle 92 im erforderlichen Umfang in Drehbewegung versetzt, wodurch durch den Generator 90 die notwendige elektrische Energie erzeugt wird. Allerdings ist es nicht zwingend erforderlich, dass die der Turbine 98 zuzuführende Luft über zwei Verdichter komprimiert wird, wie dies anhand der Fig. 8 verdeutlicht wird. So gehen von der Generatorwelle 92 nur der Verdichter 96 sowie die Turbine 98 aus.

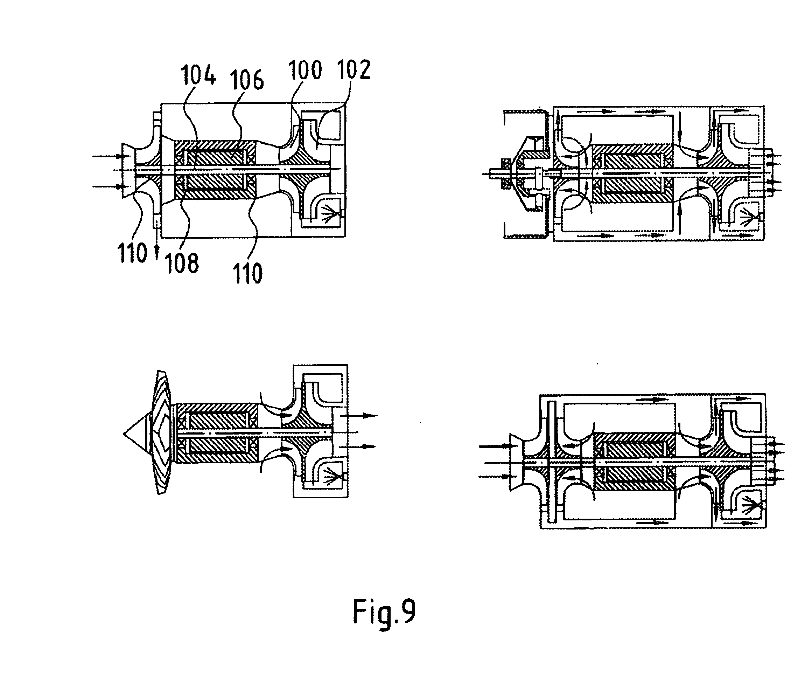

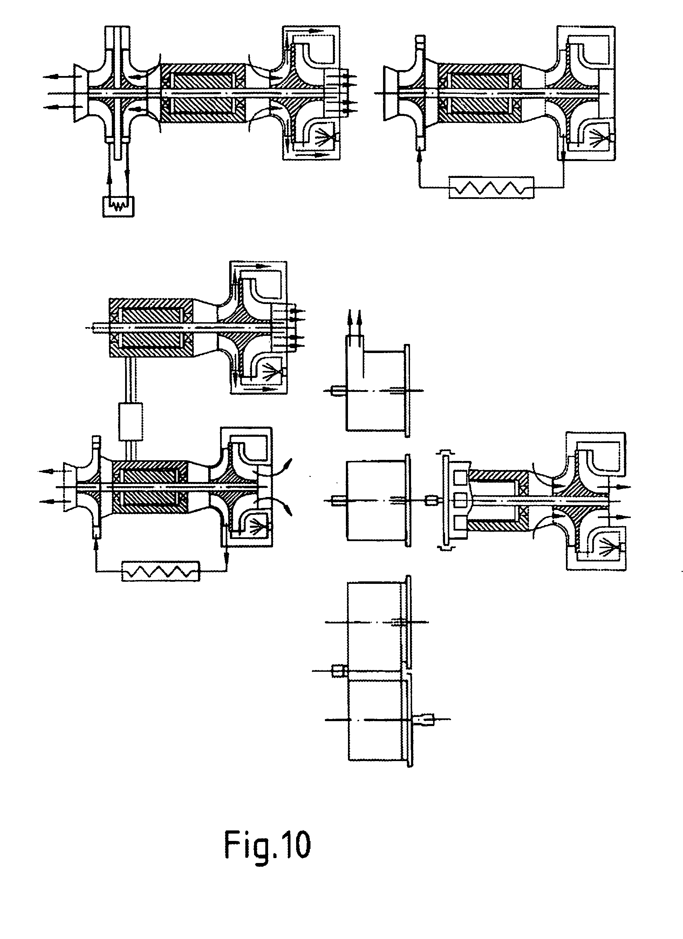

Den Fig. 9 und 10 sind verschiedene Ausführungsformen von Energielieferanten zu entnehmen, die jeweils einen Verdichter 100 und eine Turbine 102 aufweisen, die von einer gemeinsamen Welle 104 ausgehen, die Läuferwelle eines Generators 106 ist, über den der zum Antrieb des Hubschraubers benutzte Elektromotor mit Strom versorgt wird. Dabei hat der Generator 106 grundsätzlich auch die Funktion eines Starters. Nachstehend wird jedoch aus Gründen der Vereinfachung nur von dem Generator 106 gesprochen.

Der Generator 106 weist zwei Lagerstellen 108, 110 auf, die ölfrei mit zum Beispiel Fettdauerschmierung oder Ölnebelschmierung versehen sind, wobei die Ölnebelschmierung aus der Generatorinnenkühlung, sofern dieser sprühölgekühlt ausgeführt ist, resultieren kann.

Es besteht jedoch auch die Möglichkeit, den Generator 106 mit Magnetlagerung zu versehen. Dies kommt einer höheren Steifigkeit der Welle 104 zugute. Aber auch eine Luftlagertechnik kann zur Anwendung gelangen. In diesem Fall sind keine wesentlichen zusätzlichen Bauteile wie Zylinder und Gehäuse erforderlich. Diese Aufgabe übernimmt zumindest teilweise der Läufer und der Stator des Generators 106 mit seinem bedingten Luftspalt und relativ rauer Oberfläche.

Das Turbinensystern, das den Fig. 9 und 10 zu entnehmen ist, ist modulartig mit identischen Grundkomponenten aufgebaut. So sind auf der einen Seite der Welle 106 das Leistungsteil mit Brennkammer, Turbinenstufen etc. sowie die Verdichterendstufe angeordnet. Diese werden in der Zeichnung vereinfacht allein als Verdichter 100 und Turbine 102 gekennzeichnet. Auf der gegenüberliegenden Seite der Welle 104 kann sich eine Vorverdichterstufe in Form eines weiteren Verdichters 110 befinden, so dass ein kompaktes Antriebsaggregat mit hoher Energiedichte zur Verfügung steht. Die Baukastenweise ermöglicht mittels Verbindungsstück - wie dies in Fig. 10 unten rechts dargestellt ist - eine Adaption von zusätzlichen Baugruppen wie Stufengetriebe, Pumpe, Kompressor, Wandlergetriebe etc. Somit steht eine Gasturbinenfamilie für die vielfältigsten Aufgaben zur Verfügung, wobei neben dem eifindungsgemäßen Antrieb für Hubschrauber auch Luft-, Straßen- und Schienenfahrzeuge als Einsatzmöglichkeiten zu nennen sind. Auch erkennt man in der Darstellung der Fig. 10, dass eine Luftkonditionierung ermöglicht wird. Ferner wird die Erfindung auch dann nicht verlassen, wenn der Generator 106 durch einen gesonderten Anlasser in Drehung versetzt wird, wie sich dies aus der Fig. 10 unten links ergibt.

Erkennbar zeigen die Fig. 9 und 10 Motorfamilien modularen Designs. Die Einheiten können elektrische Energie, pneumatische Energie und Klimatisierung bieten, und zwar alles in einem. Mittels Reduzierung eines Zahnradantriebs und/oder Regelantriebs, der wie andere Elemente Teil des Systems ist, können die Einheiten in kostengünstige, leichte, hocheffiziente Turbowellen-Maschinen umgewandelt werden, die ein Minimum an Wartung verlangen. Die Einheiten sind derart ausgebildet, dass sie weltweit zum mobilen und ortsfesten Einsatz geeignet sind, z. B. für Gebäude, Zelte, Luft-, Land- und Wasservehikel, Kreuzfahrtschiffe, Ölfeldeinsätze und Ölbohrinseln, medizinische Behälter etc.

Bezug nehmend auf die Luftfahrt sind die Einheiten ideal zum Boden- und Luftgebrauch, z. B. APUs für Starrflügler und Helikopter und als Hauptantriebsmotoren für Helikopter und Turboprop-Flugzeuge sowie für Flughafengeländeequipment, Flughafen-Backupsysteme etc.

Für den wartungsfreien Betrieb (kein Öl) können die meisten Einheiten mit Luftlagern oder magnetischen Lagern ausgestattet sein.

In der Fig. 9 wird oben links ein Turbokompressor, oben rechts eine Turbowelle, unten links ein Turbofan und unten rechts ein Turbogenerator dargestellt.

Die Fig. 10 zeigt oben links eine Anordnung zur Klimatisierung mit Reinluft kombiniert mit einem Turbogenerator. Oben rechts wird eine Klimatisierung mit Nebenluft kombiniert mit einem Turbogenerator dargestellt.

In der Zeichnung unten links wird eine Gasturbine prinzipiell wiedergegeben, die mit einer CFC-freien Klimatisierung oder anderen austauschbaren elektrisch betriebenen Arbeitsmodulen verbunden ist. Schließlich wird in Fig. 10 unten rechts eine Gasturbine mit ankoppelbaren austauschbaren mechanisch betriebenen Arbeitsmodulen für verschiedene Anwendungen rein prinzipiell dargestellt.

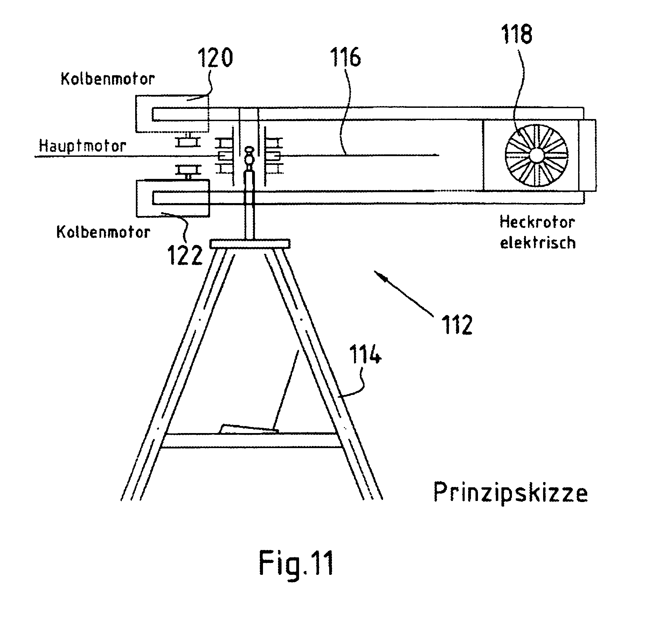

Eine weitere Antriebsform eines Hubschraubers 112 mit kardanisch gelagerter Hubschraubemutzlastwelle 114 und nur einem Hauptrotor 116 sowie elektrischem Heckrotor 118 ist in Fig. 11 dargestellt. Zum Antrieb dienen zwei Leichtbaukolbenmotoren 120, 122, von denen einer oberhalb und der andere unterhalb der Hauptrotorebene angeordnet und mit der Hubeinheit bestehend aus dem Hauptrotor 116, dem Heckrotor 118, dem Antrieb für den Hauptantrieb 116 und Zellenbauteile verbunden sind. Vorzugsweise im Massenschwerpunkt, gleich Auftriebsmittelpunkt der Hubeinheit (Primärsystem), ist die Nutzlastzelle 114 kardanisch gelagert. Der Antriebsstrang Kolbenmotor 120, 122 - Hauptrotor 116 beinhaltet vorzugsweise Riemengetriebe, um die Drehbewegung zu übertragen.

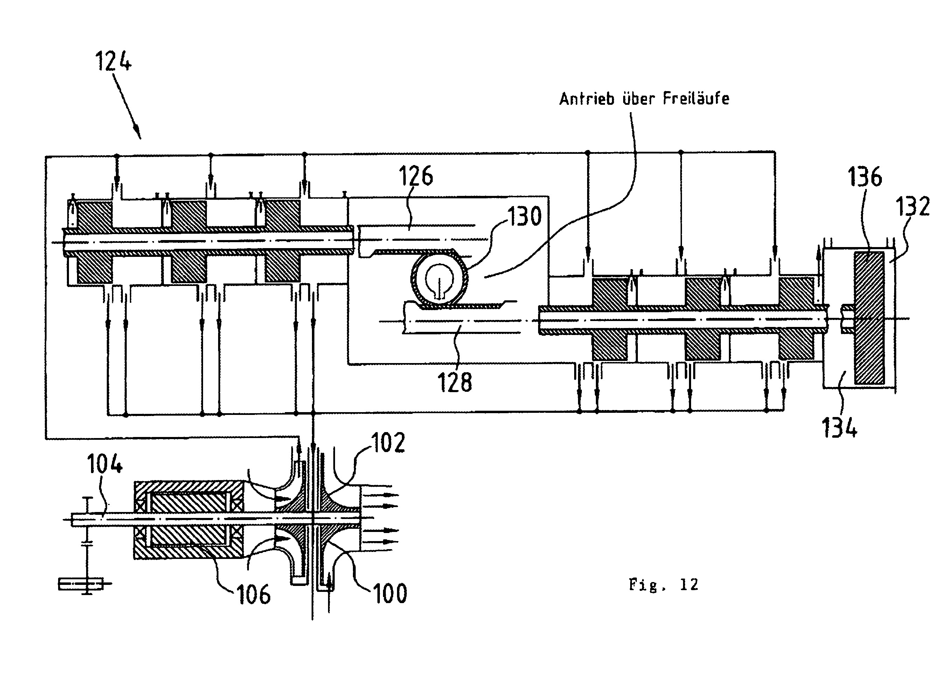

Als Kolbenmotoren kommen Schwingkolbenverbrennungsmotoren in Frage, von denen einer rein beispielhaft in Fig. 12 dargestellt und mit dem Bezugszeichen 124 gekennzeichnet ist, vorzugsweise in Verbindung mit Druckluftmotor für den Hauptrotorantrieb.

Die Fig. 12 verdeutlicht, dass Schwingkolbenverbrennungsmotoren mit jeweils beidseits drei Kolben zum Einsatz gelangen können, wobei die Kolben auf jeder Seite jeweils einen Verbrennungsraum begrenzen und eine gemeinsame Kolbenstange 126, 128 aufweisen, die mit einer Welle 130 kämmen, die ihrerseits über Freiläufe mit Abtriebswellen verbunden ist, um eine gleichsinnige Drehbewegung abzugeben, mittels der der Hauptrotor 116 angetrieben wird.

Des Weiteren kann von einem der Schwingkolbenverbrennungsmotoren ein Arbeitsmodul ausgehen, das in der Fig. 12 mit 132 gekennzeichnet ist und einen in einem Zylinderraum 134 hin- und herschwingenden Kolben 136 umfasst, der mit der Kolbenstange des entsprechenden Schwingkolbenverbrennungsmotors verbunden ist. Dieser kann komprimierte Luft zum Betreiben von Druckluftmotoren oder sonstiger Verbraucher (z. B. Flugzeuge, Pkw als Hauptantrieb) liefern und ist auch für die allgemeine Industrie geeignet.

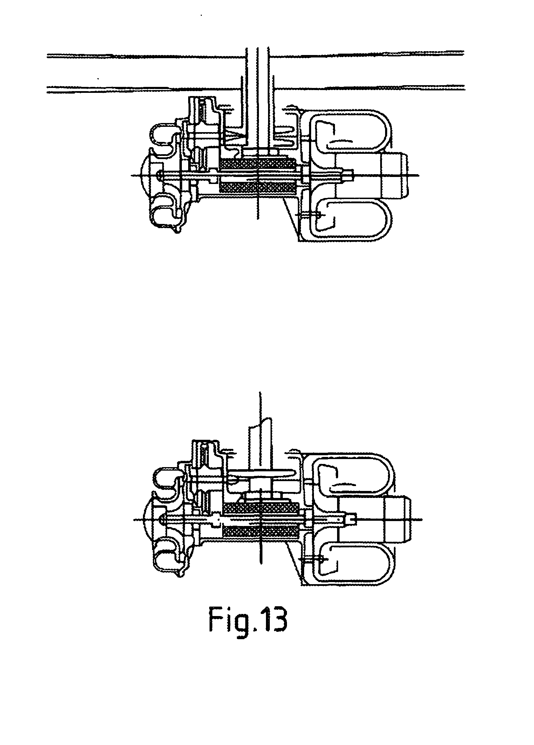

Eine weitere Ausgestaltung einer erfingdungsgemäß zum Einsatz gelangenden Turbine ist der Fig. 13 zu entnehmen. So kann die Turbine mit integriertem Hauptrotorgetriebe und Turbogenerator ausgebildet sein bzw. integral ein Koaxialrotorgetriebe aufweisen. Ferner besteht die Möglichkeit, in die Turbine eine komplette Steuerkinematik für zyklische und kollektive Blattverstellung zu integrieren. Auch integrierte Servos mit Fly-by-wire-Konfiguration sind möglich.

Die Erfindung wird auch dann nicht verlassen, wenn der Hauptrotor bzw. die Koaxialrotoren entsprechend des in Fig. 1a dargestellten Heckrotors angetrieben werden. Ein entsprechender Antrieb ist auch geeignet, um in Zeppelinen oder Flächenflugzeugen eingebaut zu werden, um die Möglichkeit eines Senkrechtstarts zu bieten.

Als Antrieb für Zeppeline werden die Rotoren vorzugsweise kipp- und schwenkbar gelagert, wobei der Elektroantrieb auch in der Rotor-/Fannabe untergebracht sein kann (vorzugsweise gegenläufig, weil drehmomentfrei, dadurch leichtere, einfachere Zellenstruktur).

## Patentansprüche

1. Hubschrauber (10, 48, 76) umfassend zumindest einen Rotor (12, 68, 70), einen den Rotor antreibbaren Antrieb sowie eine eine Last wie eine Person aufnehmende Zelle (22, 50), wobei der zumindest eine Rotor gegenüber der Zelle gelagert ist, und wobei
der Antrieb zumindest einen Elektromotor aufweist, der mit dem zumindest einen Rotor (12, 68, 70) als Einheit gegenüber der Zelle (22, 50) gelagert ist,
**dadurch gekennzeichnet,**
**dass** die aus dem Elektromotor und dem Rotor (12, 68, 70) bestehende Einheit gegenüber der Zelle kardanisch gelagert ist,
**dass** der Rotor (12, 68, 70) von einer Hohlwelle (18, 54, 56) ausgeht, die Läufer (36, 42, 44, 74, 82, 84) des Elektromotors trägt, dass die Hohlwelle koaxial eine Halterung (20, 52) des Elektromotors umgibt und dass von der Halterung zumindest ein Stator (34, 72, 78, 80) des Elektromotors ausgeht.

2. Hubschrauber nach Anspruch 1,
**dadurch gekennzeichnet,**
**dass** die Zelle (22) gegenüber der Halterung (20) verdrehgesichert ist.

3. Hubschrauber nach zumindest einem der vorhergehenden Ansprüche,
**dadurch gekennzeichnet,**
**dass** von der Halterung (20) ein Träger oder Rahmen (26) für einen Heckrotor (32) ausgeht.

4. Hubschrauber nach Anspruch 3,
**dadurch gekennzeichnet,**
**dass** der Heckrotor (32) elektrisch antreibbar ist.

5. Hubschrauber nach einem der Ansprüche 3 oder 4,
**dadurch gekennzeichnet,**
**dass** der Träger (28) zwei zueinander beabstandete Streben (28, 30) umfasst, zwischen denen sich der Rotor (12) bzw. dessen Blätter (14,1 6) erstrecken.

6. Hubschrauber nach zumindest einem der Ansprüche 3 bis 5,
**dadurch gekennzeichnet,**
**dass** der Heckrotor (32) zwei gegenläufige Heckrotoren aufweist, die jeweils über einen Elektromotor antreibbar sind.

7. Hubschrauber nach zumindest einem der Ansprüche 3 bis 6,
**dadurch gekennzeichnet,**
**dass** die Heckrotoren (33, 35) in ihrem Spitzenbereich (41) aus magnetischem Werkstoff wie Neodym ausgebildet sind oder aufweisen und dass die Heckrotoren peripher von mit Strom durchfließbaren Spulen (39) umgeben sind.

8. Hubschrauber nach zumindest einem der Ansprüche 4 bis 7,
**dadurch gekennzeichnet,**
**dass** der Elektromotor ein getakteter bürstenloser Gleichstrom-/Torquemotor ist.

9. Hubschrauber nach zumindest Anspruch 1,
**dadurch gekennzeichnet,**
**dass** der Rotor (12) über zwei Elektromotoren antreibbar ist.

10. Hubschrauber nach zumindest Anspruch 1,
**dadurch gekennzeichnet,**
**dass** der Rotor (12, 68, 70) getriebelos antreibbar ist.

11. Hubschrauber nach zumindest einem der vorhergehenden Ansprüche,
**dadurch gekennzeichnet,**
**dass** der Hubschrauber (48, 76) zwei gegenläufige Rotoren (68, 70) umfasst und dass die Rotoren (68, 70) von Hohlwellen (54, 56) ausgehen, die koaxial eine Halterung (52) umgeben und gegenüber dieser drehbar abgestützt sind.

12. Hubschrauber nach zumindest einem der vorhergehenden Ansprüche,
**dadurch gekennzeichnet,**
**dass** sich Schubvektor des bzw. der Rotoren (68, 70) vorzugsweise in der Hauptrotorebene befindet.

13. Hubschrauber nach zumindest einem der vorhergehenden Ansprüche,
**dadurch gekennzeichnet,**
**dass** der Hubschrauber (48,76) mittels Taumelscheibe und kollektiver Blattverstellung bzw. Einzelblattsteuerung steuerbar ist.

14. Hubschrauber nach Anspruch 11,
**dadurch gekennzeichnet,**
**dass** jeder Rotor (68, 70) über einen gesonderten Elektromotor antreibbar ist, dass die Elektromotoren von der Halterung (52) ausgehen, dass von jeder Hohlwelle ein Läufer (82, 84) von einem der Elektromotoren ausgeht und dass jedem Läufer ein von der Halterung (52) ausgehender Stator von einem der Elektromotoren zugeordnet ist.

## Claims

1. Helicopter (10, 48, 76) comprising at least one rotor (12, 68, 70), a drive unit driving the rotor and a cabin (22, 50) accommodating a load such as a person, where the at least one rotor is mounted in a bearing relative to the cabin and where the drive unit has at least one electric motor mounted in a bearing relative to the cabin (22, 50) as a unit with the at least one rotor (12, 68, 70),
wherein
the unit consisting of the electric motor and the rotor (12, 68, 70) is mounted in a cardanic bearing relative to the cabin,
wherein the rotor (12, 68, 70) extends from a hollow shaft (18, 54, 56) carrying electric motor rotors (36, 42, 44, 74, 82, 84), wherein the hollow shaft coaxially surrounds a mounting (20, 52) of the electric motor and wherein at least one electric motor stator (34, 72, 78, 80) extends from said mounting.

2. Helicopter according to Claim 1,
**wherein**
the cabin (22) is secured against turning relative to the mounting (20).

3. Helicopter according to at least one of the preceding claims,
**wherein**
a support or frame (26) for a tail rotor (32) extends from the mounting (20).

4. Helicopter according to Claim 3,
**wherein**
the tail rotor (32) can be electrically driven.

5. Helicopter according to one of Claims 3 or 4,
**wherein**
the support (28) comprises two struts (28, 30) at a distance from one another and between which extend the rotor (12) or its blades (14, 16).

6. Helicopter according to at least one of Claims 3 to 5,
**wherein**
the tail rotor (32) has two tail rotors which rotate in opposite directions and which can each be driven by an electric motor.

7. Helicopter according to at least one of Claims 3 to 6,
**wherein**
the tail rotors (33, 35) are made of or have in their tip area (41) a magnetic material such as neodymium and wherein the tail rotors are peripherally surrounded by coils (39) through which current can flow.

8. Helicopter according to at least one of Claims 4 to 7,
**wherein**
the electric motor is a cycled brushless DC/torque motor.

9. Helicopter according to at least Claim 1,
**wherein**
the rotor (12) can be driven by two electric motors.

10. Helicopter according to at least Claim 1,
**wherein**
the rotor (12, 68, 70) can be driven without a transmission.

11. Helicopter according to at least one of the preceding claims,
**wherein**
the helicopter (48, 76) comprises two rotors (68, 70) which rotate in opposite directions and wherein the rotors (68, 70) extend from hollow shafts (54, 56) coaxially surrounding a mounting (52) and rotatably supported relative thereto.

12. Helicopter according to at least one of the preceding claims,
**wherein**
the thrust vector of the rotor(s) (68, 70) is preferably in the main rotor plane.

13. Helicopter according to at least one of the preceding claims,
**wherein**
the helicopter (48, 76) can be controlled by means of a swashplate and collective blade control / cyclic blade control.

14. Helicopter according to Claim 11,
**wherein**
each rotor (68, 70) can be driven by a separate electric motor, wherein the electric motors extend from the mounting (52), wherein a rotor (82, 84) of one of the electric motors extends from each hollow shaft and wherein a stator of one of the electric motors extending from the mounting (52) is assigned to each rotor.

## Revendications

1. Hélicoptère (10, 48, 76) comprenant au moins un rotor (12, 68, 70), un système d'entraînement pouvant entraîner le rotor, ainsi qu'une cellule (22, 50) accueillant une charge telle qu'une personne, sachant que l'au moins un rotor tourne sur palier par rapport à la cellule, et que
le système d'entraînement présente au moins un moteur électrique qui, avec l'au moins un rotor (12, 68, 70), tourne sur palier en tant qu'unité par rapport à la cellule (22, 50),
**caractérisé en ce**
**que** l'unité constituée du moteur électrique et du rotor (12, 68, 70) est montée sur cardan par rapport à la cellule,
**que** le rotor (12, 68, 70) part d'un arbre creux (18, 54, 56) qui porte des induits mobiles (36, 42, 44, 74, 82, 84) du moteur électrique, que l'arbre creux entoure coaxialement un support (20, 52) du moteur électrique et que du support part au moins un stator (34, 72, 78, 80) du moteur électrique.

2. Hélicoptère selon la revendication 1,
**caractérisé en ce**
**que** la cellule (22) est assurée contre la giration par rapport au support (20).

3. Hélicoptère selon au moins une des revendications précédentes,
**caractérisé en ce**
**que** du support (20) part un élément porteur ou un cadre (26) pour un rotor anticouple (32).

4. Hélicoptère selon la revendication 3,
**caractérisé en ce**
**que** le rotor anticouple (32) peut être entraîné électriquement.

5. Hélicoptère selon l'une des revendications 3 ou 4,
**caractérisé en ce**
**que** l'élément porteur (28) comprend deux poutres (28, 30) distantes l'une de l'autre, entre lesquelles s'étendent le rotor (12) et/ou ses pales (14, 16).

6. Hélicoptère selon au moins une des revendications 3 à 5,
**caractérisé en ce**
**que** le rotor anticouple (32) présente deux rotors anticouples contrarotatifs qui peuvent être respectivement entraînés par un moteur électrique.

7. Hélicoptère selon au moins une des revendications 3 à 6,
**caractérisé en ce**
**qu'**à leur extrémité (41), les rotors anticouples (33, 35) sont constitués d'un matériau magnétique tel que du néodyme ou en contiennent, et que les rotors anticouples sont périphériquement entourés de bobines (39) pouvant être traversées par un courant électrique.

8. Hélicoptère selon au moins une des revendications 4 à 7,
**caractérisé en ce**
**que** le moteur électrique est un moteur cadencé à courant continu à fort couple sans balais.

9. Hélicoptère selon au moins la revendication 1,
**caractérisé en ce**
**que** le rotor (12) peut être entraîné par deux moteurs électriques.

10. Hélicoptère selon au moins la revendication 1,
**caractérisé en ce**
**que** le rotor (12, 68, 70) peut être entraîné sans engrenage.

11. Hélicoptère selon au moins une des revendications précédentes,
**caractérisé en ce**
**que** l'hélicoptère (48, 76) comprend deux rotors (68, 70) contrarotatifs et que les rotors (68, 70) partent d'arbres creux (54, 56) qui entourent coaxialement un support (52) et sont fixés de manière à pouvoir tourner autour de celui-ci.

12. Hélicoptère selon au moins une des revendications précédentes,
**caractérisé en ce**
**que** le vecteur de poussée du ou des rotor(s) (68, 70) se trouve de préférence dans le plan principal de rotor.

13. Hélicoptère selon au moins une des revendications précédentes,
**caractérisé en ce**
**que** l'hélicoptère (48, 76) peut être piloté au moyen d'un plateau cyclique et d'une commande à pas collectif ou à pas cyclique des pales.

14. Hélicoptère selon la revendication 11,
**caractérisé en ce**
**que** chaque rotor (68, 70) peut être entraîné par un moteur électrique distinct, que les moteurs électriques partent du support (52), que de chaque arbre creux part un induit mobile (82, 84) d'un des moteurs électriques et qu'à chaque induit mobile est associé un stator d'un des moteurs électriques, partant du support (52).
